(19) Europäisches Patentamt
European Patent Office
Office européen des brevets

(11) **EP 4 455 195 A1**

(12) **EUROPEAN PATENT APPLICATION**
published in accordance with Art. 153(4) EPC

(43) Date of publication:
**30.10.2024 Bulletin 2024/44**

(21) Application number: **22911164.6**

(22) Date of filing: **19.12.2022**

(51) International Patent Classification (IPC):
**C08J 5/04** (2006.01)     **C08G 69/26** (2006.01)
**C08K 7/02** (2006.01)     **C08L 77/06** (2006.01)

(52) Cooperative Patent Classification (CPC):
**C08G 69/26; C08J 5/04; C08K 7/02; C08L 77/06**

(86) International application number:
**PCT/JP2022/046622**

(87) International publication number:
**WO 2023/120462 (29.06.2023 Gazette 2023/26)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **20.12.2021 JP 2021206185**

(71) Applicant: **Kuraray Co., Ltd.**
**Kurashiki-shi, Okayama 710-0801 (JP)**

(72) Inventor: **NANYA, Atsushi**
**Tsukuba-shi, Ibaraki 305-0841 (JP)**

(74) Representative: **Müller-Boré & Partner**
**Patentanwälte PartG mbB**
**Friedenheimer Brücke 21**
**80639 München (DE)**

(54) **COMPLEX**

(57)     A composite includes a polyamide (A) and continuous fibers (B), wherein the polyamide (A) comprises a diamine unit (X) and a dicarboxylic acid unit (Y), the diamine unit (X) comprises 0.1 mol% or more and less than 36 mol% of a diamine unit (X1), and the aliphatic diamine has 6 to 10 carbon atoms, the aliphatic diamine having an alkyl group having two or three carbon atoms bonded to a carbon atom at 2-position when a carbon atom to which any one of two amino groups is bonded is taken as 1-position.

EP 4 455 195 A1

**Description**

Technical Field

The present invention relates to a composite containing a polyamide and continuous fibers, and in particular, the composite in which the polyamide includes a specific diamine unit having a branched chain and a dicarboxylic acid unit.

Background Art

As a material having more excellent specific strength and specific modulus than metal materials, such as a steel plate and aluminum, attention has been paid to a material (FRP) containing a combination of continuous fibers and a plastic material. As a matrix resin of a common FRP, a thermosetting resin is used, but there are problems in which a thermosetting resin requires a long molding cycle and is difficult to postprocess, for example, weld to an additional part, and recycle. As a procedure for solving the problems, in recent years, the application of a thermoplastic resin as a matrix resin has been increasingly studied. In particular, a polyamide has been widely studied since the polyamide is excellent in heat resistance and machine characteristics, for example, like PTLs 1 and 2.

In the production of FRP, it is important to sufficiently impregnate continuous fibers with a matrix resin. Otherwise, the strength of a composite is insufficient, which makes it difficult to achieve target physical properties. On the other hand, the long molding cycle affects productivity as describe above, resulting in an increase in cost. Therefore, the achievement of both physical properties and productivity is required even using a thermoplastic resin.

For example, PTL 3 discloses a prepreg in which a polyamide is a matrix resin. When the crystallization rate of the polyamide from a molten state falls within a specific range, high flexural strength and flowability can be achieved.

PTL 4 discloses a unidirectional fiber-reinforced tape in which a polyamide is a matrix resin. When the initial crystallinity and relative viscosity of the polyamide fall within specific ranges, both the physical properties of a substrate and productivity can be achieved.

Citation List

Patent Literature

PTL 1: JPH05-032888A
PTL2: JPH08-294918A
PTL 3: JP2013-159675A
PTL 4: WO2015/046290

Summary of Invention

Technical Problem

The inventions described above are made, while both physical properties and productivity are not sufficiently achieved, and practical use of FRP using a thermoplastic resin is still restricted.

Therefore, an object of the present invention is to provide a composite having a short molding cycle, and excellent heat resistance and machine characteristics.

Solution to Problem

As a result of intensive studies to achieve the object, the inventor of the present invention has arrived the present invention described below and found that the object can be achieved.

Specifically, the present invention is as follows.

[1] A composite containing a polyamide (A) and continuous fibers (B), in which the polyamide (A) comprises a diamine unit (X) and a dicarboxylic acid unit (Y), the diamine unit (X) comprises 0.1 mol% or more and less than 36 mol% of a diamine unit (X1), and the aliphatic diamine has 6 to 10 carbon atoms, the aliphatic diamine having an alkyl group having two or three carbon atoms bonded to a carbon atom at 2-position when a carbon atom to which any one of two amino groups is bonded is taken as 1-position.

[2] The composite according to [1], in which the diamine unit (X1) comprises a constituent unit derived from an aliphatic diamine having 9 carbon atoms.

[3] The composite according to [1] or [2], in which the diamine unit (X1) comprises a constituent unit derived from at least one selected from the group consisting of 2-ethyl-1,7-heptanediamine and 2-propyl-1,6-hexanediamine.

[4] The composite according to any one of [1] to [3], in which the diamine unit (X) comprises 1 to 10 mol% of the diamine unit (X1).

[5] The composite according to any one of [1] to [4], in which the diamine unit (X) further comprises a diamine unit (X2) as a diamine unit other than the diamine unit (X1), and the diamine unit (X2) is a constituent unit derived from at least one selected from the group consisting of a liner aliphatic diamine, a branched aliphatic diamine other than the aliphatic diamine constituting the diamine unit (X1), an alicyclic diamine, and an aromatic diamine.

[6] The composite according to any one of [1] to [5], in which the diamine unit (X2) is a constituent unit derived from at least one selected from the group consisting of a liner aliphatic diamine and a branched aliphatic diamine having a methyl group as a branched chain.

[7] The composite according to any one of [1] to [6], in which the diamine unit (X2) is a constituent unit derived from a diamine having 6 to 10 carbon atoms.

[8] The composite according to any one of [1] to [7], in which the diamine unit (X2) is a constituent unit derived from at least one selected from the group consisting of 1,6-hexanediamine, 1,9-nonanediamine, 1,10-decanediamine, 2-methyl-1,5-pentanediamine, and 2-methyl-1,8-octanediamine.

[9] The composite according to any one of [1] to [8], in which the dicarboxylic acid unit (Y) comprises a constituent unit derived from at least one selected from the group consisting of an aliphatic dicarboxylic acid, an aromatic dicarboxylic acid, and an alicyclic dicarboxylic acid.

[10] The composite according to any one of [1] to [9], in which the dicarboxylic acid unit (Y) comprises a constituent unit derived from at least one selected from the group consisting of terephthalic acid, cyclohexanedicarboxylic acid, and naphthalenedicarboxylic acid.

[11] The composite according to any one of [1] to [10], in which the continuous fibers (B) are at least one selected from the group consisting of carbon fibers, glass fibers, aramid fibers, wholly aromatic polyester fibers, ceramic fibers, and metal fibers.

[12] The composite according to any one of [1] to [11], in which the continuous fibers (B) have a fiber volume content of 10 to 80 volume%.

Advantageous Effects of Invention

The present invention can provide a composite having both a short molding cycle, and excellent heat resistance and machine characteristics.

Description of Embodiments

The following description is based on an example of embodiments of the present invention (hereinafter also referred to as "the present embodiment"). However, embodiments described below are examples for embodying the technical idea of the present invention, and the present invention is not limited to the following description.

In addition, in the description herein, preferred embodiments are shown, but a combination of two or more of individual preferred embodiments is also a preferred embodiment. Regarding the matters indicated by the numerical ranges, in a case where there are several numerical ranges, it is possible to selectively combine the lower limit value and the upper limit value thereof to obtain a preferred embodiment.

In the description herein, when there is a description of a numerical range of "XX to YY", it means "XX or more and YY or less".

Further, in the description herein, "- unit" (in which "-" represents a monomer) means "constituent unit derived from -", for example, "dicarboxylic acid unit" means "constituent unit derived from dicarboxylic acid", and "diamine unit" means "constituent unit derived from diamine".

[Polyamide (A)]

A polyamide (A) used in the present invention comprises a diamine unit (X) and a dicarboxylic acid unit (Y).

The diamine unit (X) is characterized by comprising a specific amount of a diamine unit (X1) derived from an aliphatic diamine having 6 to 10 carbon atoms, the aliphatic diamine having an alkyl group having two or three carbon atoms bonded to a carbon atom at 2-position when a carbon atom to which any one of two amino groups is bonded is taken as 1-position.

In general, when a component having a large excluded volume such as a branched chain is contained in a polymer skeleton, molecular chains are less likely to be regularly arranged, and thus the crystallization rate of the polymer tends to be low. However, the polyamide (A) contains a specific amount of a diamine component having an alkyl group having 2 or 3 carbon atoms, such as an ethyl group or a propyl group, as a branched chain, and therefore the crystallization rate is unexpectedly increased.

In general, when a polyamide has a bulky substituent such as a branched chain, the polyamide is less likely to have a crystal structure, and the melting point tends to decrease. However, even when the polyamide (A) has a relatively bulky substituent having 2 or 3 carbon atoms, such as an ethyl group or a propyl group, as a branched chain, the polyamide (A) has little decrease in the melting point, and can exhibit excellent heat resistance.

Further, a glass transition temperature is a property which is higher as the molecular mobility of the amorphous portion is lower. Therefore, when a component having high molecular mobility such as a branched chain is contained, the glass transition temperature generally tends to become lower. However, unexpectedly, the polyamide (A) has little decrease in the glass transition temperature, and can exhibit excellent heat resistance.

In the present embodiment, as one of the reasons why the above-described effects are obtained, it is considered that the number of carbon atoms in the branched chain, the position of the branched chain, and the amount of the branched chain included in the diamine unit (X1) contained in the polyamide (A) may affect the improvement of the crystallization rate while maintaining excellent heat resistance. However, the detailed reason is not clear.

(Diamine Unit (X))

<Diamine Unit (X1)>

The diamine unit (X) includes a diamine unit (X1) derived from an aliphatic diamine having 6 to 10 carbon atoms, the aliphatic diamine having an alkyl group having two or three carbon atoms bonded to a carbon atom at 2-position when a carbon atom to which any one of two amino groups is bonded is taken as 1-position.

When assuming a linear aliphatic chain having carbon atoms of which carbon atoms at both ends are each bonded to two amino groups, the diamine unit (X1) is a constituent unit derived from an aliphatic diamine having a structure in which one of the hydrogen atoms on the carbon atom at 2-position adjacent to the carbon atom at 1-position to which any one of the amino groups is bonded is substituted with an alkyl group having 2 or 3 carbon atoms. Hereinafter, the constituent unit derived from an aliphatic diamine having a structure in which one of the hydrogen atoms on the carbon atom at 2-position is substituted with an alkyl group having 2 or 3 carbon atoms is also referred to as a "branched aliphatic diamine unit".

When the number of carbon atoms of the alkyl group is 1 or 4 or more, there is a possibility that the crystallization rate is not improved and the heat resistance is reduced.

The number of carbon atoms of the branched aliphatic diamine unit forming the diamine unit (X1) is preferably 8 to 10, and more preferably 9. When the number of carbon atoms is within the above range, the polymerization reaction between dicarboxylic acid and diamine proceeds well, and the physical properties of the polyamide (A) are more easily improved.

In the branched aliphatic diamine unit forming the diamine unit (X1), the alkyl group having 2 or 3 carbon atoms is preferably at least one selected from the group consisting of an ethyl group, a propyl group, and an isopropyl group, and more preferably at least one selected from the group consisting of an ethyl group and a propyl group.

The branched aliphatic diamine forming the diamine unit (X1) may have a branched chain such as a methyl group (referred to as an "additional branched chain") at a carbon other than 2-position as long as the effects of the present invention are not impaired. The number of the additional branched chain is preferably 1 or less, and it is more preferable that the diamine unit (X1) do not contain the additional branched chain.

Examples of the diamine unit (X1) include constituent units derived from 2-ethyl-1,4-butanediamine, 2-ethyl-1,5-pentanediamine, 2-ethyl-1,6-hexanediamine, 2-ethyl-1,7-heptanediamine, 2-ethyl-1,8-octanediamine, 2-propyl-1,5-pentanediamine, 2-propyl-1,6-hexanediamine, 2-propyl-1,7-heptanediamine, and 2,4-diethyl-1,6-hexanediamine. These constituent units may be included alone or two or more kinds thereof may be included.

In particular, from the viewpoint that a more excellent improvement in crystallization rate can be expected, it is preferable that the diamine unit (X1) include a constituent unit derived from at least one selected from the group consisting of 2-ethyl-1,7-heptanediamine and 2-propyl-1,6-hexanediamine.

The content of the diamine unit (X1) in the diamine unit (X) is 0.1 mol% or more and less than 36 mol%. When the content is less than 0.1 mol%, an improvement in crystallization rate is difficult. When the content is 36 mol% or more, a decrease in heat resistance may occur.

From the viewpoint of obtaining a polyamide (A) having a more excellent balance between heat resistance and crystallization rate, the content of the diamine unit (X1) in the diamine unit (X) is preferably 0.5 mol% or more, more preferably 1 mol% or more, still more preferably 3 mol% or more, and even more preferably 5 mol% or more. From the above viewpoint, the content of the diamine unit (X1) in the diamine unit (X) is preferably 35 mol% or less, more preferably 30 mol% or less, still more preferably 25 mol% or less, even more preferably 20 mol% or less, even more preferably 18 mol% or less, even more preferably 15 mol% or less, and even more preferably 10 mol% or less.

As one preferred embodiment, when the diamine unit (X1) includes a constituent unit derived from at least one selected from the group consisting of 2-ethyl-1,7-heptanediamine and 2-propyl-1,6-hexanediamine, an example of the content of each constituent unit is as follows.

The content of the constituent unit derived from 2-ethyl-1,7-heptanediamine in the diamine unit (X) is preferably 0.5 mol% or more, and more preferably 2 mol% or more. The content is preferably 20 mol% or less, preferably 16 mol% or less, more preferably 10 mol% or less, and still more preferably 5 mol% or less. That is, the content of the constituent unit derived from 2-ethyl-1,7-heptanediamine in the diamine unit (X) is preferably 0.5 mol% or more and 20 mol% or less.

The content of the constituent unit derived from 2-propyl-1,6-hexanediamine in the diamine unit (X) is preferably 0.1 mol% or more, and more preferably 0.5 mol% or more. The content is preferably 5 mol% or less, and more preferably 2 mol% or less. That is, the content of the constituent unit derived from 2-propyl-1,6-hexanediamine in the diamine unit (X) is preferably 0.1 mol% or more and 5 mol% or less.

<Diamine Unit (X2)>

The polyamide (A) includes as the diamine unit (X) a diamine unit other than the diamine unit (X1) (hereinafter also referred to as a "diamine unit (X2)").

From the viewpoint of favorable progression of a polymerization reaction between dicarboxylic acid and diamine, the diamine unit (X2) is preferably a constituent unit derived from a diamine having 6 to 10 carbon atoms, more preferably a constituent unit derived from a diamine having 8 to 10 carbon atoms, and still more preferably a constituent unit derived from a diamine having 9 carbon atoms.

Examples of the diamine unit (X2) include a constituent unit derived from at least one selected from the group consisting of a linear aliphatic diamine, a branched aliphatic diamine other than the aliphatic diamine constituting the diamine unit (X1), an alicyclic diamine, and an aromatic diamine.

Examples of the linear aliphatic diamine include ethylenediamine, 1,3-propanediamine, 1,4-butanediamine, 1,5-pentanediamine, 1,6-hexanediamine, 1,7-heptanediamine, 1,8-octanediamine, 1,9-nonanediamine, 1,10-decanediamine, 1,11-undecanediamine, 1,12-dodecanediamine, 1,13-tridecanediamine, 1,14-tetradecanediamine, 1,15-pentadecanediamine, 1,16-hexadecanediamine, 1,17-heptadecanediamine, and 1,18-octadecanediamine.

Examples of the branched aliphatic diamine other than the aliphatic diamine constituting the diamine unit (X1) include 1,2-propanediamine, 1-butyl-1,2-ethanediamine, 1,1-dimethyl-1,4-butanediamine, 1-ethyl-1,4-butanediamine, 1,2-dimethyl-1,4-butanediamine, 1,3-dimethyl-1,4-butanediamine, 1,4-dimethyl-1,4-butanediamine, 2-methyl-1,3-propanediamine, 2-methyl-1,4-butanediamine, 2,3-dimethyl-1,4-butanediamine, 2-methyl-1,5-pentanediamine, 3-methyl-1,5-pentanediamine, 2-butyl-2-ethyl-1,5-pentanediamine, 2,5-dimethyl-1,6-hexanediamine, 2,4-dimethyl-1,6-hexanediamine, 3,3-dimethyl-1,6-hexanediamine, 2,2-dimethyl-1,6-hexanediamine, 2,2,4-trimethyl-1,6-hexanediamine, 2,4,4-trimethyl-1,6-hexanediamine, 2-methyl-1,8-octanediamine, 3-methyl-1,8-octanediamine, 1,3-dimethyl-1,8-octanediamine, 1,4-dimethyl-1,8-octanediamine, 2,4-dimethyl-1,8-octanediamine, 3,4-dimethyl-1,8-octanediamine, 4,5-dimethyl-1,8-octanediamine, 2,2-dimethyl-1,8-octanediamine, 3,3-dimethyl-1,8-octanediamine, 4,4-dimethyl-1,8-octanediamine, 2-methyl-1,9-nonanediamine, and 5-methyl-1,9-nonanediamine.

Examples of the alicyclic diamine include cyclohexanediamine, methylcyclohexanediamine, norbomanedimethylamine, tricyclodecanedimethylamine, bis(4-amino-3-ethylcyclohexyl)methane, and bis(4-amino-3-ethyl-5-methylcyclohexyl)methane.

Examples of the aromatic diamine include p-phenylenediamine, m-phenylenediamine, p-xylylenediamine, m-xylylenediamine, 4,4'-diaminodiphenylmethane, 4,4'-diaminodiphenylsulfone, 4,4'-diaminodiphenyl ether, and 4,4'-methylenebis(2,6-diethylaniline).

The constituent unit derived from the diamine may be one kind alone or may be two or more kinds.

Among the above-described diamine units (X2), a constituent unit derived from at least one selected from the group consisting of the linear aliphatic diamine and the branched aliphatic diamine having a methyl group as a branched chain is more preferable. From the viewpoint of easily exhibiting the effects of the present invention more remarkably, the additional diamine unit (X2) is more preferably a constituent unit derived from at least one selected from the group consisting of 1,6-hexanediamine, 1,9-nonanediamine, 1,10-decanediamine, 2-methyl-1,5-pentanediamine, and 2-methyl-1,8-octanediamine.

(Dicarboxylic Acid Unit (Y))

As the dicarboxylic acid unit (Y), an arbitrary dicarboxylic acid unit can be included.

The dicarboxylic acid unit (Y) can include, for example, a constituent unit derived from at least one selected from the group consisting of an aliphatic dicarboxylic acid, an aromatic dicarboxylic acid, and an alicyclic dicarboxylic acid.

Examples of the aliphatic dicarboxylic acid include oxalic acid, malonic acid, succinic acid, glutaric acid, adipic acid, pimelic acid, suberic acid, azelaic acid, sebacic acid, undecanedicarboxylic acid, dodecanedicarboxylic acid, dimethylmalonic acid, 2,2-diethylsuccinic acid, 2,2-dimethylglutaric acid, 2-methyladipic acid, and trimethyladipic acid.

Examples of the aromatic dicarboxylic acid include terephthalic acid, isophthalic acid, diphenic acid, 4,4'-biphenyldicarboxylic acid, diphenylmethane-4,4'-dicarboxylic acid, diphenylsulfone-4,4'-dicarboxylic acid, 1,2-naphthalenedicarboxylic acid, 1,3-naphthalenedicarboxylic acid, 1,4-naphthalenedicarboxylic acid, 1,5-naphthalenedicarboxylic acid, 1,6-naphthalenedicarboxylic acid, 1,7-naphthalenedicarboxylic acid, 1,8-naphthalenedicarboxylic acid, 2,3-naphthalenedicarboxylic acid, 2,6-naphthalenedicarboxylic acid, 2,7-naphthalenedicarboxylic acid, 2,3-furandicarboxylic acid, 2,4-furandicarboxylic acid, 2,5-furandicarboxylic acid, and 3,4-furandicarboxylic acid.

Examples of the alicyclic dicarboxylic acid include 1,3-cyclopentanedicarboxylic acid, 1,3-cyclohexanedicarboxylic acid, 1,4-cyclohexanedicarboxylic acid, cycloheptanedicarboxylic acid, cyclooctanedicarboxylic acid, and cyclodecanedicarboxylic acid.

The constituent unit derived from the dicarboxylic acid may be included alone or two or more kinds thereof may be included.

From the viewpoint of easily exhibiting the effects of the present invention more remarkably, the dicarboxylic acid unit (Y) preferably includes a constituent unit derived from at least one selected from the group consisting of the aromatic dicarboxylic acid and the alicyclic dicarboxylic acid, and more preferably includes a constituent unit derived from at least one selected from the group consisting of terephthalic acid, cyclohexanedicarboxylic acid, and naphthalenedicarboxylic acid.

The molar ratio of the diamine unit (X) to the dicarboxylic acid unit (Y) [(diamine unit (X))/(dicarboxylic acid unit (Y))] in the polyamide (A) is preferably 45/55 to 55/45. When the molar ratio of the diamine unit (X) to the dicarboxylic acid unit (Y) is within the above range, a polymerization reaction proceeds well, and a polyamide (A) excellent in desired physical properties is easily obtained.

The molar ratio of the diamine unit (X) to the dicarboxylic acid unit (Y) can be adjusted in accordance with the blending ratio (molar ratio) of a raw material diamine and a raw material dicarboxylic acid.

The total proportion of the diamine unit (X) and the dicarboxylic acid unit (Y) in the polyamide (A) (the proportion of the total number of moles of the diamine unit (X) and the dicarboxylic acid unit (Y) to the number of moles of all the constituent units constituting the polyamide (A)) is preferably 70 mol% or more, more preferably 80 mol% or more, still more preferably 90 mol% or more, and even more preferably 95 mol% or more, or may be 100 mol%. The total proportion of the diamine unit (X) and the dicarboxylic acid unit (Y) in the polyamide (A) may be 100 mol% or less or may be 99.5 mol% or less. That is, the total proportion of the diamine unit (X) and the dicarboxylic acid unit (Y) in the polyamide (A) is preferably 70 mol% or more and 100 mol% or less. When the total proportion of the diamine unit (X) and the dicarboxylic acid unit (Y) is within the above-described range, a polyamide more excellent in desired physical properties can be obtained.

(Aminocarboxylic Acid Unit)

The polyamide (A) may further include an aminocarboxylic acid unit in addition to the diamine unit (X) and the dicarboxylic acid unit (Y).

Examples of the aminocarboxylic acid unit include constituent units derived from lactams such as caprolactam and lauryllactam; and aminocarboxylic acids such as 11-aminoundecanoic acid and 12-aminododecanoic acid. The content of the aminocarboxylic acid unit in the polyamide (A) is preferably 40 mol% or less, and more preferably 20 mol% or less with respect to 100 mol% of the total of the diamine unit (X) and the dicarboxylic acid unit (Y) constituting the polyamide (A). That is, the content of the aminocarboxylic acid unit in the polyamide (A) is preferably 0 to 40 mol% with respect to 100 mol% of the total of the diamine unit (X) and the dicarboxylic acid unit (Y) constituting the polyamide.

(Polyvalent Carboxylic Acid Unit)

The polyamide (A) may include a constituent unit derived from a polyvalent carboxylic acid having a valence of 3 or more, such as trimellitic acid, trimesic acid, or pyromellitic acid, within a range in which melt molding is possible, as long as the effects of the present invention are not impaired.

(Terminal Blocking Agent Unit)

The polyamide (A) may include a constituent unit derived from a terminal blocking agent (terminal blocking agent unit).

The content of the terminal blocking agent unit is preferably 1.0 mol% or more, and more preferably 2.0 mol% or more with respect to 100 mol% of the diamine unit (X). The content of the terminal blocking agent unit is preferably 10 mol% or less, more preferably 5.0 mol% or less with respect to 100 mol% of the diamine unit (X). That is, the content of the terminal blocking agent unit is preferably 1.0 mol% or more and 10 mol% or less with respect to 100 mol% of the diamine unit (X). When the content of the terminal blocking agent unit is within the above-described range, a polyamide (A) excellent in desired physical properties is easily obtained. The content of the terminal blocking agent unit can be made to be within the above-described desired range by appropriately adjusting the amount of the terminal blocking agent at the time of charging polymerization raw materials. In consideration of volatilization of a monomer component during polymerization, it is desirable to finely adjust the amount of the terminal blocking agent to be charged so that a desired amount of the terminal blocking agent unit is introduced into the obtained polyamide (A).

Examples of a method for determining the content of the terminal blocking agent unit in the polyamide (A) include, as described in JPH07-228690A, a method in which a solution viscosity is measured, the total amount of terminal groups is calculated from the relationship between the viscosity and the number-average molecular weight, and the amounts of amino groups and carboxy groups determined by titration are subtracted therefrom, and a method in which $^1$H-NMR is used to determine the content based on the integrated values of signals corresponding to the diamine unit and the terminal blocking agent unit. The latter is preferable.

As the terminal blocking agent, a monofunctional compound having reactivity with a terminal amino group or a terminal carboxy group can be used. Specifically, examples thereof include a monocarboxylic acid, an acid anhydride, a monoisocyanate, a monoacid halide, a monoester, a monoalcohol, and a monoamine. From the viewpoint of reactivity and the stability of a blocked terminal, and the like, the terminal blocking agent for a terminal amino group is preferably a monocarboxylic acid, and the terminal blocking agent for a terminal carboxy group is preferably a monoamine. From the viewpoint of ease of handling and the like, the terminal blocking agent is more preferably a monocarboxylic acid.

The monocarboxylic acid used as the terminal blocking agent is not particularly limited as long as it has reactivity with an amino group, and examples thereof include aliphatic monocarboxylic acids such as acetic acid, propionic acid, butyric acid, valeric acid, caproic acid, caprylic acid, lauric acid, tridecanoic acid, myristic acid, palmitic acid, stearic acid, pivalic acid, and isobutyric acid; alicyclic monocarboxylic acids such as cyclopentanecarboxylic acid and cyclohexanecarboxylic acid; aromatic monocarboxylic acids such as benzoic acid, toluic acid, $\alpha$-naphthalenecarboxylic acid, $\beta$-naphthalenecarboxylic acid, methylnaphthalenecarboxylic acid, and phenylacetic acid; and arbitrary mixtures thereof. Among these, from the viewpoint of reactivity, stability of the blocked terminal, price, and the like, at least one selected from the group consisting of acetic acid, propionic acid, butyric acid, valeric acid, caproic acid, caprylic acid, lauric acid, tridecanoic acid, myristic acid, palmitic acid, stearic acid, and benzoic acid is preferable.

The monoamine used as the terminal blocking agent is not particularly limited as long as it has reactivity with a carboxy group, and examples thereof include aliphatic monoamines such as methylamine, ethylamine, propylamine, butylamine, hexylamine, octylamine, decylamine, stearylamine, dimethylamine, diethylamine, dipropylamine, and dibutylamine; alicyclic monoamines such as cyclohexylamine and dicyclohexylamine; aromatic monoamines such as aniline, toluidine, diphenylamine, and naphthylamine; and arbitrary mixtures thereof. Among these, from the viewpoint of reactivity, high boiling point, stability of the blocked terminal, price, and the like, at least one selected from the group consisting of butylamine, hexylamine, octylamine, decylamine, stearylamine, cyclohexylamine, and aniline is preferable.

From the viewpoint of easily achieving favorable heat resistance, machine characteristics, and moldability, the content of the polyamide (A) in the entire amount of a composite except continuous fibers (B) is preferably 80 mass% or more, more preferably 85 mass% or more, and still more preferably 90 mass% or more, or may be 100 mass%. The content of the polyamide (A) may be 100 mass% or less, may be 99 mass% or less, or may be 95 mass% or less.

(Physical Properties of Polyamide)

The inherent viscosity of the polyamide (A) is preferably 0.5 dL/g or more, and more preferably 0.7 dL/g or more. The inherent viscosity of the polyamide (A) is preferably 2.0 dL/g or less, and more preferably 1.5 dL/g or less. That is, the melt viscosity of the polyamide (A) is preferably 0.5 dL/g or more and 2.0 dL/g or less. When the inherent viscosity is within the above-described range, a polyamide (A) more excellent in desired physical properties can be obtained.

The inherent viscosity of the polyamide (A) can be determined by measuring the flow-down time of a solution in which concentrated sulfuric acid at a concentration of 0.2 g/dL and a temperature of 30°C is used as a solvent, and more specifically, can be determined by a method described in Examples.

The melting point of the polyamide (A) is preferably 250°C or higher, and more preferably 280°C or higher. When the melting point is within the above-described range, a polyamide (A) having excellent heat resistance can be obtained. The upper limit of the melting point of the polyamide (A) is not particularly limited, but is preferably 330°C or lower in consideration of moldability and the like. That is, the melting point of the polyamide (A) is preferably 250°C or higher and 330°C or lower.

The melting point of the polyamide (A) can be determined as a peak temperature of an endothermal peak that appears when the temperature is raised at a rate of 10°C/min using a differential scanning calorimetry (DSC) analyzer, and more specifically, can be determined by the method described in Examples.

The glass transition temperature of the polyamide (A) is preferably of 110°C or higher, and more preferably 120°C or higher. When the glass transition temperature is within the above-described range, a polyamide (A) having excellent heat resistance can be obtained. The upper limit of the glass transition temperature of the polyamide (A) is not particularly limited, but is preferably 180°C or lower, and more preferably 160°C or lower, or may be 150°C or lower, from the viewpoint of handling and the like. That is, the glass transition temperature of the polyamide (A) is preferably 110°C or higher and 180°C or lower.

The glass transition temperature of the polyamide (A) can be determined as a temperature at an inflection point that appears when the temperature is raised at a rate of 20°C/min using a differential scanning calorimetry (DSC) analyzer, and more specifically, can be determined by the method described in Examples.

The difference between the melting point and crystallization temperature of the polyamide (A) is preferably 20 to 40°C. The crystallization temperature of the polyamide (A) can be determined as a peak temperature of an exothermic peak that appears when the temperature is decreased at a rate of 10°C/min using a differential scanning calorimetry (DSC) analyzer, and more specifically, can be determined by the method described in Examples.

The crystallization rate of the polyamide (A) is preferably $0.020°C^{-1}$ or more, and more preferably $0.040°C^{-1}$ or more. When the crystallization rate is within the above-described range, a highly productive polyamide can be obtained.

The crystallization rate can be determined by the following formula (Formula 1).

$$\text{Crystallization rate } (°C^{-1}) = 1/(\text{melting point } (°C) - \text{crystallization temperature } (°C))$$

(Formula 1)

(Method for Producing Polyamide (A))

The polyamide (A) can be produced by any method known as a method for producing a polyamide. For example, the polyamide (A) can be produced by a method such as a melt polymerization method, a solid phase polymerization method, or a melt extrusion polymerization method using a dicarboxylic acid and a diamine as raw materials. Among these, a solid phase polymerization method is preferable from the viewpoint of favorably reducing thermal deterioration during polymerization.

The polyamide (A) can be produced, for example, by first adding a diamine, a dicarboxylic acid, and if necessary, a catalyst and a terminal blocking agent at once to produce a nylon salt, then heating and polymerizing the nylon salt at a temperature of 200 to 250°C to form a prepolymer, and further solid phase polymerizing the prepolymer or polymerizing the prepolymer using a melt extruder. When the final stage of the polymerization is carried out by solid phase polymerization, the polymerization is preferably carried out under reduced pressure or an inert gas stream, and when the polymerization temperature is within the range of 200 to 280°C, the polymerization rate is high, the producibility is excellent, and coloring and gelling can be effectively suppressed. When the final stage of the polymerization is carried out using a melt extruder, the polymerization temperature is preferably 370°C or lower, and when the polymerization is carried out under such conditions, there is almost no decomposition, and a polyamide (A) with little deterioration is obtained.

Examples of a catalyst that can be used in the production of the polyamide (A) include phosphoric acid, phosphorous acid, hypophosphorous acid, and salts or esters thereof. Examples of the salts or esters include salts of phosphoric acid, phosphorous acid, or hypophosphorous acid with metals such as potassium, sodium, magnesium, vanadium, calcium, zinc, cobalt, manganese, tin, tungsten, germanium, titanium, and antimony; ammonium salts of phosphoric acid, phosphorous acid, or hypophosphorous acid; ethyl esters, isopropyl esters, butyl esters, hexyl esters, isodecyl esters, octadecyl esters, decyl esters, stearyl esters, and phenyl esters of phosphoric acid, phosphorous acid, or hypophosphorous acid.

The amount of the catalyst used is preferably 0.01 mass% or more, more preferably 0.05 mass% or more, and is preferably 1.0 mass% or less, more preferably 0.5 mass% or less, with respect to 100% by mass of the total mass of the raw materials. When the amount of the catalyst used is the above-described lower limit value or more, the polymerization proceeds favorably. When the amount of the catalyst used is the upper limit value or less, impurities derived from the catalyst are less likely to be generated, and for example, when a polyamide (A) or a polyamide composition containing the polyamide (A) is formed into a film, defects due to the impurities can be prevented.

[Continuous Fibers (B)]

Examples of the continuous fibers (B) used in the present embodiment include inorganic fillers such as carbon fibers, glass fibers, silicon carbide fibers, alumina fibers, potassium titanate fibers, aluminum borate fibers, ceramic fibers, and metal (for example, gold, silver, copper, iron, nickel, titanium, or stainless steel) fibers; and organic fibers such as wholly aromatic polyester fibers, polyphenylene sulfide fibers, aramid fibers, polysulfone amide fibers, phenol resin fibers, polyimide fibers, and fluorine fibers. One kind of the continuous fibers may be used alone, or two or more kinds thereof may be used in combination.

Among these, from the viewpoint of mechanical properties and availability, at least one selected from the group consisting of carbon fibers, glass fibers, aramid fibers, wholly aromatic polyester fibers, ceramic fibers, and metal fibers is preferable, at least one selected from the group consisting of carbon fibers and glass fibers is more preferable.

The continuous fibers (B) may be subjected to a treatment with a surface treatment agent or a sizing agent, if necessary.

Examples of a substance used when the continuous fibers (B) are glass fibers include a silane coupling agent and a titanate-based coupling agent. The silane coupling agent is not particularly limited, but examples thereof include aminosilane-based coupling agents such as γ-aminopropyltriethoxysilane, γ-aminopropyltrimethoxysilane, and N-β-(aminoethyl)-γ-aminopropylmethyldimethoxysilane; mercaptosilane-based coupling agents such as γ-mercaptopropyltrimethoxysilane, and γ-mercaptopropyltriethoxysilane; epoxysilane-based coupling agents; and vinyl silane-based coupling agents.

Examples of a substance used when the continuous fibers (B) are carbon fibers include a copolymer containing as a constituent unit a carboxylic anhydride-containing unsaturated vinyl monomer unit and an unsaturated vinyl monomer unit except a carboxylic anhydride-containing unsaturated vinyl monomer, an epoxy compound, a polyurethane resin, a homopolymer of acrylic acid, a copolymer of acrylic acid with another copolymerizable monomer, and a salt thereof with a primary, secondary, or tertiary amine.

One kind of the surface treatment agent and sizing agent may be used alone, or two or more kinds thereof may be used in combination.

The continuous fibers (B) may be those obtained by combining the continuous fibers (B) with an industrially and commonly used plastic resin material once and then removing the plastic resin material, or so-called those recycled or reused. A method for producing recycled or reused continuous fibers is not particularly limited, but examples thereof include a method in which a combined product is placed in a calcining furnace and calcined at a temperature equal to or higher than the decomposition temperature of the plastic resin material to extract the continuous fibers, a method in which the calcination and electrolysis are combined, and a method in which the plastic resin material is dissolved with an acid and an alkali solvent.

In the present embodiment, the continuous fibers (B) used in a composite are continuous fibers having an average fiber length of 100 mm or more. The upper limit value of the length of the continuous fibers (B) is not particularly limited as long as the effects of the present invention are not impaired.

The average fiber diameter of the continuous fibers (B) is not particularly limited, but is preferably 3 to 50 μm from the viewpoint of handling.

The average fiber diameter and average fiber length of the continuous fibers (B) can be observed and measured, for example, with a scanning electron microscope.

Examples of the form of the continuous fibers (B) include a strand, a sheet obtained by laying down strands in one direction, and a woven fabric and a knitted fabric obtained by crossing or knitting strands (for example, non crimp fabric (NCF)).

The number of filaments of the continuous fibers (B) is not particularly limited, but from the viewpoint of productivity, is preferably 100 to 350,000, and more preferably 1,000 to 100,000.

The tensile strength of single fibers constituting the continuous fibers (B) is preferably 2,000 to 8,000 MPa, and more preferably 3,000 to 6,000 MPa.

From the viewpoint of mechanical characteristics, in a composite of the present embodiment, the fiber volume content (Vf) of the continuous fibers (B) is preferably 10 to 80 volume%, and more preferably 20 to 70 volume%. The fiber volume content of the continuous fibers (B) may be 20 to 50 volume% or may be 20 to 30 volume%. When the fiber volume content of the continuous fibers (B) is 10 volume% or more, the composite can have sufficient mechanical characteristics. When the fiber volume content of the continuous fibers (B) is 80 volume% or less, the continuous fibers (B) are sufficiently impregnated with the polyamide (A).

Herein, in the present embodiment, the fiber volume content means the proportion of the volume of the continuous fibers (B) with respect to the entire volume of the composite. In the present embodiment, the entire amount of the composite is a value calculated from the specific gravity and use amount (weight) of a material constituting the composite. The volume of the continuous fibers (B) is calculated from the specific gravity and weight of the continuous fibers (B) contained in the composite.

[Additional Additive]

The composite of the present embodiment may contain an additional additive in addition to the polyamide (A) and the continuous fibers (B) as long as the effects of the present invention are not impaired.

As the additional additive, for example, a thermal stabilizer, a light stabilizer, an elastomer, a lubricant, a plasticizer, a nucleating agent, a crystallization retarding agent, a hydrolysis preventing agent, an antistatic agent,, a radical inhibitor, a flatting agent, an ultraviolet absorber, a flame retarder, a chain extending agent, a heat absorbing agent, a thermal conductive substance, an inorganic substance other than the continuous fibers (B), or the like may be contained.

Examples of the inorganic substance include carbon nanotube, fullerene, talc, wollastonite, zeolite, sericite, mica, kaolin, clay, pyrophyllite, silica, bentonite, aluminosilicate, silicon oxide, magnesium oxide, alumina, zirconium oxide, titanium oxide, iron oxide, calcium carbonate, magnesium carbonate, dolomite, calcium sulfate, barium sulfate, calcium hydroxide, magnesium hydroxide, aluminum hydroxide, glass beads, glass flakes, glass powder, ceramic beads, boron nitride, silicon carbide, carbon black, and graphite. As the inorganic substance other than the continuous fibers (B), the above-described surface treatment agent and sizing agent may be used, if necessary.

Examples of the lubricant include a metallic soap, a montanic acid wax, a polyolefin wax, a fatty amide wax, and a rice wax.

Examples of the crystallization retarding agent include azine-based dyes such as nigrosin and a derivative thereof.

Examples of the chain extending agent include a compound having a functional group that reacts with an amino group or a carboxy group at the end of the polyamide, such as an oxazoline, imidazoline epoxy, isocyanate, maleimide, or acid anhydride group, for example, 1,3-phenylenebisoxazoline.

One kind of the additional additives may be included alone, or two or more kinds thereof may be included.

The content of the additional additive is not particularly limited as long as the effects of the present invention are not impaired, but can be set to 0.02 to 200 parts by mass with respect to 100 parts by mass of the polyamide (A).

As a method for adding the additional additive, a known method can be used. Examples thereof include a method for adding the additional additive during polymerization of the polyamide (A), a method for dry blending and melt-kneading the additional additive with the polyamide (A), and a method for adding the additional additive during combining the polyamide (A) with the continuous fibers (B).

[Method for Producing Composite]

As a method for producing the composite of the present embodiment, a known method can be used.

Examples of the method for producing the composite include a method in which the continuous fibers (B) are drawn in the molten polyamide (A) to impregnate a fiber bundle with the resin, a method in which a resin film formed from the polyamide (A) and the continuous fibers (B) are stacked in an alternating manner, heated, and pressurized, a method in which a resin powder of the polyamide (A) is attached to the continuous fibers (B), heated, and pressurized; a method in which the continuous fibers (B) are impregnated with a solvent in which the polyamide (A) is dissolved, and the solvent is volatilized; a method in which fibers are passed through a solvent in which a resin powder of the polyamide (A) is dispersed to attach the fibers to the resin, if necessary, the solvent is volatilized, and the fibers are heated and pressurized; and a method in which resin fibers formed from the polyamide (A) and the continuous fibers (B) are knitted, heated, and pressurized. However, the method for producing the composite of the present embodiment is not limited to these methods.

During the production of the composite, an additive such as a chain extending agent may be added, or after the production, a treatment such as a heating treatment or an electron-beam cross-linking may be performed.

The composite of the present embodiment can be further shaped into an industrially useful shape by a known method. For example, a method, such as press-molding in which the composite is pinched by molds, heated, and pressurized, or overmolding in which press-molding and injection molding of another material are performed at the same time, filament winding or sheet winding molding in which the composite is wound around a cylindrical mold, heated, and pressurized can be adopted.

The composite of the present embodiment can be effectively used in a wide variety of fields such as the industrial application material field, the electrical/electronic field, the civil engineering/construction field, the transportation vehicle field, and the leisure field. In particular, in the field of transportation vehicles such as an aircraft, an automotive, a train, and a ship, the composite can be effectively used as a member forming a main structure thereof.

For example, for casings of a personal computer, a display, OA equipment, a cell phone, a personal digital assistant, a digital video camera, an optical instrument, an audio device, an air conditioner, an illuminator, a toy, and other consumer electronics; electric or electronic apparatus parts such as a tray, a chassis, and a battery case; parts for civil engineering and architecture (building, roadway, bridge, watercourse, bank, etc.), such as a pillar, a panel, and a reinforcement material; industrial parts such as a blade of a wind generator; skin and body parts such as various members, various frames, various hinges, various arms, various axles, various axle bearings, various beams, various pillars, various supports, and various rails; exterior parts such as a bumper, a molding, an undercover, an engine cover, a flow regulation plate, a spoiler, a cowl louver, and an aeropart; interior parts such as an instrument panel, sheet and tape frames, a door trim, a pillar trim, a handle, and various modules; automobile and motorbike parts such as a motor part, a CNG tank, a gasoline tank, a fuel pump, an air intake, an intake manifold, a carburetor main body, a carburetor spacer, various pipes, and various valves; aircraft parts such as a landing gear pod, a winglet, a spoiler, an edge, a rudder, an elevator, a fairing, and a rib; leisure parts such as an inner sole and outsole of athletic shoe, a frame and grommet of a racket, a head and sleeve of a golf club, a reel and rod of a fishing tackle, a screw of a boat, a suspension, gear, saddle, and bottle cage of a bicycle; and the like, the composite is suitably used.

Examples

Hereinafter, the present invention will be specifically described with reference to Examples and Comparative Examples, but the present invention is not limited thereto.
Each evaluation in Examples and Comparative Examples was carried out in accordance with methods described below.

<Polyamide>

Inherent Viscosity

The inherent viscosity (dL/g) of each of polyamides obtained in Examples and Comparative Examples using concentrated sulfuric acid as a solvent at a concentration of 0.2 g/dL and a temperature of 30°C was determined from the following formula.

$$\eta = [\ln(t_1/t_0)]/c$$

In the formula, $\eta$ represents the inherent viscosity (dL/g), $t_0$ represents the flow-down time (second) of the solvent (concentrated sulfuric acid), $t_1$ represents the flow-down time (second) of the sample solution, and c represents the concentration (g/dL) of the sample in the sample solution (i.e., 0.2 g/dL).

Melting Point, Crystallization Temperature, and Glass Transition Temperature

The melting point, crystallization temperature, and glass transition temperature of each of the polyamides obtained in Examples and Comparative Examples were measured using a differential scanning calorimetry analyzer "DSC7020" manufactured by Hitachi High-Tech Science Corporation.
The melting point and crystallization temperature were measured in accordance with ISO 11357-3 (2nd edition, 2011). Specifically, in a nitrogen atmosphere, a sample (polyamide) was heated from 30°C to 340°C at a rate of 10°C/min, held at 340°C for 5 minutes to completely melt the sample, then cooled to 50°C at a rate of 10°C/min, held at 50°C for 5 minutes, and then heated again to 340°C at a rate of 10°C/min. The peak temperature of the exothermic peak that appeared when the temperature was lowered was defined as the crystallization temperature, and the peak temperature of the endothermic peak that appeared when the temperature was raised again was defined as the melting point (°C).
The glass transition temperature (°C) was measured in accordance with ISO 11357-2 (2nd edition, 2013). Specifically, in a nitrogen atmosphere, the sample (polyamide) was heated from 30°C to 340°C at a rate of 20°C/min, held at 340°C for 5 minutes to completely melt the sample, then cooled to 50°C at a rate of 20°C/min, and held at 50°C for 5 minutes. The temperature of the inflection point that appeared when the temperature was raised again to 200°C at a rate of 20°C/min was defined as the glass transition temperature (°C).

Crystallization Rate

The crystallization rate of each of the polyamides obtained in Examples and Comparative Examples was determined by the following formula (Formula 1).

$$\text{Crystallization rate } (°C^{-1}) = 1/(\text{melting point } (°C) - \text{crystallization temperature } (°C))$$

(Formula 1)

In (Formula 1), "melting point (°C)" and "crystallization temperature (°C)" are measured values obtained by the above method. In Table 1, the unit of the crystallization rate is expressed as "1/°C", which has the same meaning as "°C$^{-1}$".

<Composite>

Flexural Strength and Flexural Modulus

Each of composites obtained in Examples and Comparative Examples was cut into 100 mm × 15 mm, and the flexural strength (MPa) and the flexural modulus (GPa) were measured under a condition of a testing speed of 5 mm/min and a distance between fulcrums of 80 mm using a universal testing machine (manufactured by Instron Corporation) in accordance with JIS K7074:1988.

Moldability

The polyamide in each of Examples and Comparative Examples and continuous fibers were used. The continuous fibers were impregnated with the polyamide by heating and pressurization at a temperature of 350°C and a pressure of 50 kgf/cm$^2$ for 5 minutes. The impregnation of the continuous fibers with the polyamide was visually observed and evaluated in accordance with the following evaluation criteria.

<Evaluation Criteria>

A: the continuous fibers were sufficiently impregnated with the polyamide.
B: A polyamide layer was seen on a part of the surface of the composite.
C: A polyamide layer was seen on most of the surface of the composite without completely impregnating the continuous fibers with the polyamide.

Fiber Volume Content (Vf)

From the weight and specific gravity of the continuous fibers used in Examples and Comparative Examples, the volume of the continuous fibers contained in the composite was calculated. From the weight and specific gravity of the composite obtained in each of Examples and Comparative Examples, the entire volume of the composite was calculated. By the following formula, the fiber volume content (Vf) was calculated.

$$\text{Vf} = (\text{volume of continuous fibers in composite})/(\text{entire volume of composite}) \times 100$$

Additional additives used in Examples and Comparative Examples are shown below.

[Additional Additives]

Antioxidant

"SUMILIZER (registered trademark) GA-80" (manufactured by Mitsui Chemicals, Inc.)

Lubricant

"Light Amide (registered trademark) WH-255" (manufactured by Kyoeisha Chemical Co., Ltd.)

[Example 1]

<<Preparation of Polyamide>>

5,400 g of terephthalic acid, 5,260 g of a mixture [4/1/95 (molar ratio)] of 2-ethyl-1,7-heptanediamine, 2-propyl-1,6-hexanediamine, and 2-methyl-1,8-octanediamine, 121 g of benzoic acid, 10 g of sodium diphosphite monohydrate (0.1 mass% with respect to the total mass of the raw materials), and 4.8 L of distilled water were put into an autoclave having an internal volume of 40 L, and nitrogen replacement was carried out. The mixture was stirred at 150°C for 30 minutes, and then the temperature inside the autoclave was raised to 220°C over 2 hours. At this time, the pressure inside the autoclave was raised to 2 MPa. Heating was continued for 5 hours while the pressure was maintained at 2 MPa, and the reaction was allowed to proceed by gradually removing the water vapor. Subsequently, the pressure was decreased to 1.3 MPa over 30 minutes, and the reaction was further carried out for 1 hour to obtain a prepolymer. The obtained prepolymer was dried at 100°C under reduced pressure for 12 hours, and pulverized to a particle diameter of 2 mm or less. This was subjected to solid phase polymerization at 230°C and 13 Pa (0.1 mmHg) for 10 hours to obtain a polyamide.

<<Preparation of Polyamide Composition>>

The obtained polyamide and the additional additives at a ratio shown in Table 1 were supplied from an upstream hopper of a twin-screw extruder ("TEM-26SS" manufactured by TOSHIBA MACHINE CO., LTD.), melt-kneaded, extruded, cooled, and cut, to obtain a pellet-shaped polyamide composition.

<<Preparation of Polyamide Film>>

Using Labo Plastomill ($\varphi$: 20 mm, L/D=25, full flight screw) manufactured by Toyo Seiki Seisaku-sho, Ltd., from the polyamide composition obtained above, a film having a thickness of 200 $\mu$m$\pm$20 $\mu$m was prepared at a cylinder temperature and a die temperature that were higher than the melting point of a polyamide by 20 to 30°C with a T-die (width: 150 mm, lip width: 0.4 mm).

<<Preparation of Composite>>

Five polyamide films obtained above and four carbon fiber sheets (continuous fibers, manufactured by SHINDO Co., Ltd., NCF DB300, fabric weight: 150 g/m$^2$) were stacked in an alternating manner, heated and pressurized at a temperature higher than the melting point of a polyamide by 30 to 50°C using a compression molding machine (manufactured by Shinto Metal Industries, Ltd.), to prepare a composite having a fiber volume content (Vf) of 25 volume%.

[Example 2]

A composite was obtained in the same manner as in Example 1 except that the fiber volume content (Vf) was 50 volume%.

[Example 3]

A polyamide and a composite were obtained in the same manner as in Example 1 except that the diamine unit was a mixture [5.6/0.4/94 (molar ratio)] of 2-ethyl-1,7-heptanediamine, 2-propyl-1,6-hexanediamine, and 2-methyl-1,8-octanediamine.

[Example 4]

A polyamide and a composite were obtained in the same manner as in Example 1 except that the diamine unit was a mixture [12/3/85 (molar ratio)] of 2-ethyl-1,7-heptanediamine, 2-propyl-1,6-hexanediamine, and 2-methyl-1,8-octanediamine.

[Example 5]

A polyamide and a composite were obtained in the same manner as in Example 1 except that the diamine unit was a mixture [16/4/80 (molar ratio)] of 2-ethyl-1,7-heptanediamine, 2-propyl-1,6-hexanediamine, and 2-methyl-1,8-octanediamine.

[Example 6]

A polyamide and a composite were obtained in the same manner as in Example 1 except that the diamine unit was a mixture [4/1/20/75 (molar ratio)] of 2-ethyl-1,7-heptanediamine, 2-propyl-1,6-hexanediamine, 2-methyl-1,8-octanediamine, and 1,9-nonanediamine.

[Example 7]

A polyamide and a composite were obtained in the same manner as in Example 1 except that the diamine unit was a mixture [0.5/14.5/85 (molar ratio)] of 2-ethyl-1,7-heptanediamine, 2-methyl-1,8-octanediamine, and 1,9-nonanediamine.

[Comparative Example 1]

A polyamide having a melting point of 285°C and a composite were obtained in the same manner as in Example 1 except that the diamine unit was 2-methyl-1,8-octanediamine.

[Comparison Example 2]

A polyamide and a composite were obtained in the same manner as in Example 1 except that the diamine unit was a mixture [15/85 (molar ratio)] of 2-methyl-1,8-octanediamine and 1,9-nonanediamine.

[Example 8]

A polyamide and a composite were obtained in the same manner as in Example 1 except that the dicarboxylic acid unit was 21.3 g of naphthalenedicarboxylic acid, and the diamine unit was a mixture [4/1/20/75 (molar ratio)] of 2-ethyl-1,7-heptanediamine, 2-propyl-1,6-hexanediamine, 2-methyl-1,8-octanediamine, and 1,9-nonanediamine.

[Comparative Example 3]

A polyamide and a composite were obtained in the same manner as in Example 1 except that the dicarboxylic acid unit was 21.3 g of naphthalenedicarboxylic acid, and the diamine unit was a mixture [15/85 (molar ratio)] of 2-methyl-1,8-octanediamine and 1,9-nonanediamine.

[Example 9]

A polyamide and a composite were obtained in the same manner as in Example 1 except that the dicarboxylic acid unit was 17.0 g of cyclohexanedicarboxylic acid (cis/trans=79.9/20.1), and the diamine unit was a mixture [4/1/20/75 (molar ratio)] of 2-ethyl-1,7-heptanediamine, 2-propyl-1,6-hexanediamine, 2-methyl-1,8-octanediamine, and 1,9-nonanediamine.

[Comparative Example 4]

A polyamide and a composite were obtained in the same manner as in Example 1 except that the dicarboxylic acid unit was 17.0 g of cyclohexanedicarboxylic acid (cis/trans=79.9/20.1), and the diamine unit was a mixture [15/85 (molar ratio)] of 2-methyl-1,8-octanediamine and 1,9-nonanediamine.

[Example 10]

A polyamide and a composite were obtained in the same manner as in Example 1 except that the diamine unit was a mixture [4/1/20/75 (molar ratio)] of 2-ethyl-1,7-heptanediamine, 2-propyl-1,6-hexanediamine, 2-methyl-1,8-octanediamine, and 1,10-decanediamine.

[Comparative Example 5]

A polyamide and a composite were obtained in the same manner as in Example 1 except that the diamine unit was a mixture [20/80 (molar ratio)] of 2-methyl-1,8-octanediamine and 1,10-decanediamine.
The compositions of Examples and Comparative Examples and the measurement results thereof are shown in Table 1.

Table 1

| | | | | Ex. 1 | Ex. 2 | Ex. 3 | Ex. 4 | Ex. 5 | Ex. 6 | Ex. 7 | Co. Ex. 1 | Co. Ex. 2 | Ex. 8 | Co. Ex. 3 | Ex. 9 | Co. Ex. 4 | Ex. 10 | Co. Ex. 5 |
|---|---|---|---|---|---|---|---|---|---|---|---|---|---|---|---|---|---|---|
| Polyamide | Diamine unit | EHDA | mol% | 4 | 4 | 5.6 | 12 | 16 | 4 | 0.5 | - | - | 4 | - | 4 | - | 4 | - |
| | | PHDA | mol% | 1 | 1 | 0.4 | 3 | 4 | 1 | - | - | - | 1 | - | 1 | - | 1 | - |
| | | MODA | mol% | 95 | 95 | 94 | 85 | 80 | 20 | 14.5 | 100 | 15 | 20 | 15 | 20 | 15 | 20 | 20 |
| | | NMDA | mol% | - | - | - | - | - | 75 | 85 | - | 85 | 75 | 85 | 75 | 85 | - | - |
| | | DMDA | mol% | - | - | - | - | - | - | - | - | - | - | - | - | - | 75 | 80 |
| | | EHDA+PHDA | mol% | 5 | 5 | 6 | 15 | 20 | 5 | 0.5 | 0 | 0 | 5 | 0 | 5 | 0 | 5 | 0 |
| | Dicarboxylic acid unit | TA | mol% | 100 | 100 | 100 | 100 | 100 | 100 | 100 | 100 | 100 | - | - | - | - | 100 | 100 |
| | | NDCA | mol% | - | - | - | - | - | - | - | - | - | 100 | 100 | - | - | - | - |
| | | CHDA | mol% | - | - | - | - | - | - | - | - | - | - | - | 100 | 100 | - | - |
| | Physical properties | Solution viscosity | dL/g | 1.17 | 1.17 | 1.16 | 1.18 | 1.21 | 1.25 | 1.26 | 1.32 | 1.34 | 1.22 | 1.23 | 1.28 | 1.3 | 1.23 | 1.21 |
| | | melting point | °C | 282 | 282 | 283 | 262 | 258 | 288 | 307 | 285 | 306 | 283 | 294 | 292 | 301 | 289 | 301 |
| | | Crystallization temperature | °C | 259 | 259 | 258 | 242 | 235 | 266 | 280 | 256 | 277 | 246 | 249 | 270 | 276 | 267 | 275 |
| | | Glass transition temperature | °C | 124 | 124 | 123 | 116 | 112 | 120 | 123 | 125 | 123 | 135 | 136 | 125 | 130 | 121 | 123 |
| | | Crystallization rate | 1/°C | 0.044 | 0.044 | 0.040 | 0.050 | 0.043 | 0.046 | 0.037 | 0.034 | 0.035 | 0.027 | 0.022 | 0.045 | 0.040 | 0.045 | 0.039 |
| Polyamide composition | | Polyamide | Part by mass | 100 | 100 | 100 | 100 | 100 | 100 | 100 | 100 | 100 | 100 | 100 | 100 | 100 | 100 | 100 |
| | | Antioxidant | Part by mass | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 |
| | | Lubricant | Part by mass | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 |

| | | | | Ex. 1 | Ex. 2 | Ex. 3 | Ex. 4 | Ex. 5 | Ex. 6 | Ex. 7 | Co. Ex. 1 | Co. Ex. 2 | Ex. 8 | Co. Ex. 3 | Ex. 9 | Co. Ex. 4 | Ex. 10 | Co. Ex. 5 |
|---|---|---|---|---|---|---|---|---|---|---|---|---|---|---|---|---|---|---|
| Composite | Physical properties | Vf | volume % | 25 | 50 | 25 | 25 | 25 | 25 | 25 | 25 | 25 | 25 | 25 | 25 | 25 | 25 | 25 |
| | | Flexural strength (at 23°C) | MPa | 173 | 366 | 174 | 177 | 180 | 162 | 171 | 165 | 171 | 188 | 194 | 170 | 177 | 168 | 177 |
| | | Flexural modulus (at 23°C) | GPa | 8.2 | 15.8 | 8.2 | 8.4 | 8.5 | 7.4 | 8.0 | 7.5 | 8.0 | 7.8 | 8.1 | 7.3 | 7.8 | 7.8 | 8.2 |
| | | Moldability | - | A | A | A | A | A | A | B | B | B | B | C | A | A | A | B |
| "Ex." means Example, and "Co. Ex." means Comparative Example. | | | | | | | | | | | | | | | | | | |

The abbreviations relating to the compounds used in Table 1 above and the contents of the compounds are as shown in Table 2 below. In addition, "(EHDA + PHDA)" in Table 1 represents the total of the blending amounts (mol%) of EHDA and PHDA in the diamine unit.

Table 2

| Abbreviation | Compound |
|---|---|
| EHDA | 2-ethyl-1,7-heptanediamine |
| PHDA | 2-propyl-1,6-hexanediamine |
| MODA | 2-methyl-1,8-octanediamine |
| NMDA | 1,9-nonanediamine |
| DMDA | 1,10-decanediamine |
| TA | Terephthalic acid |
| NDCA | 2,6-naphthalenedicarboxylic acid |
| CHDA | 1,4-cyclohexanedicarboxylic acid |

From Table 1, it can be seen that when Examples 1 to 7 and Comparative Examples 1 and 2, Example 8 and Comparative Example 3, Example 9 and Comparative Example 4, and Example 10 and Comparative Example 5 are compared, the polyamides in Examples show a higher crystallization rate. This shows that in a polyamide containing the same dicarboxylic acid unit, when a specific amount of a 2-ethyl-1,7-heptanediamine unit and/or a 2-propyl-1,6-hexanediamine unit are included as a diamine unit, the crystallization rate of the polyamide with which the continuous fibers are impregnated is increased, and a composite having excellent molding cycle and excellent productivity is obtained.
It is seen that in combination of Examples 1 to 10 with Comparative Examples 1 to 5 that includes only a 2-methyl-1,8-octanediamine unit in which the branched structure is a methyl group, a specific amount of a 2-ethyl-1,7-heptanediamine unit and/or a 2-propyl-1,6-hexanediamine unit are included as a branched aliphatic diamine unit, and therefore, a decrease in melting point and glass transition temperature of the polyamide is small, heat resistance is less likely to decrease and is favorable, and a decrease in flexural strength and flexural modulus of the composite is also small.
This shows that the composites of Examples have both a short molding cycle of the composites and excellent heat resistance and mechanical strength.

Industrial Applicability

As described above, the present invention can provide a composite having high heat resistance and machine characteristics and a short molding cycle time. The composite of the present invention can be used as various molded articles required to have heat resistance and machine characteristics, has improved productivity in production of the molded articles, and is very useful.
This application is based on Japanese Patent Application (JP2021-206185) filed on December 20, 2021, the content of which is incorporated herein by reference.

Claims

1. A composite comprising a polyamide (A) and continuous fibers (B),

   wherein the polyamide (A) comprises a diamine unit (X) and a dicarboxylic acid unit (Y), the diamine unit (X) comprises 0.1 mol% or more and less than 36 mol% of a diamine unit (X1), and
   the diamine unit (X1) is a constituent unit derived from an aliphatic diamine, and
   the aliphatic diamine has 6 to 10 carbon atoms, the aliphatic diamine having an alkyl group having two or three carbon atoms bonded to a carbon atom at 2-position when a carbon atom to which any one of two amino groups is bonded is taken as 1-position.

2. The composite according to claim 1, wherein the diamine unit (X1) comprises a constituent unit derived from an aliphatic diamine having 9 carbon atoms.

3. The composite according to claim 1 or 2, wherein the diamine unit (X1) comprises a constituent unit derived from at least one selected from the group consisting of 2-ethyl-1,7-heptanediamine and 2-propyl-1,6-hexanediamine.

4. The composite according to any one of claims 1 to 3, wherein the diamine unit (X) includes 1 to 10 mol% of the diamine unit (X1).

5. The composite according to any one of claims 1 to 4, wherein the diamine unit (X) further comprises a diamine unit (X2) as a diamine unit other than the diamine unit (X1), and the diamine unit (X2) is a constituent unit derived from at least one selected from the group consisting of a liner aliphatic diamine, a branched aliphatic diamine other than the aliphatic diamine constituting the diamine unit (X1), an alicyclic diamine, and an aromatic diamine.

6. The composite according to any one of claims 1 to 5, wherein the diamine unit (X2) is a constituent unit derived from at least one selected from the group consisting of a liner aliphatic diamine and a branched aliphatic diamine having a methyl group as a branched chain.

7. The composite according to any one of claims 1 to 6, wherein the diamine unit (X2) is a constituent unit derived from a diamine having 6 to 10 carbon atoms.

8. The composite according to any one of claims 1 to 7, wherein the diamine unit (X2) is a constituent unit derived from at least one selected from the group consisting of 1,6-hexanediamine, 1,9-nonanediamine, 1,10-decanediamine, 2-methyl-1,5-pentanediamine, and 2-methyl-1,8-octanediamine.

9. The composite according to any one of claims 1 to 8, wherein the dicarboxylic acid unit (Y) comprises a constituent unit derived from at least one selected from the group consisting of an aliphatic dicarboxylic acid, an aromatic dicarboxylic acid, and an alicyclic dicarboxylic acid.

10. The composite according to any one of claims 1 to 9, wherein the dicarboxylic acid unit (Y) comprises a constituent unit derived from at least one selected from the group consisting of terephthalic acid, cyclohexanedicarboxylic acid, and naphthalenedicarboxylic acid.

11. The composite according to any one of claims 1 to 10, wherein the continuous fibers (B) are at least one selected from the group consisting of carbon fibers, glass fibers, aramid fibers, wholly aromatic polyester fibers, ceramic fibers, and metal fibers.

12. The composite according to any one of claims 1 to 11, wherein the continuous fibers (B) have a fiber volume content of 10 to 80 volume%.

## INTERNATIONAL SEARCH REPORT

| International application No. |
| --- |
| **PCT/JP2022/046622** |

**A. CLASSIFICATION OF SUBJECT MATTER**

*C08J 5/04*(2006.01)i; *C08G 69/26*(2006.01)i; *C08K 7/02*(2006.01)i; *C08L 77/06*(2006.01)i
FI: C08J5/04 CFG; C08K7/02; C08L77/06; C08G69/26

According to International Patent Classification (IPC) or to both national classification and IPC

**B. FIELDS SEARCHED**

Minimum documentation searched (classification system followed by classification symbols)

C08J5/04; C08G69/26; C08K7/02; C08L77/06

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2019-011420 A (KURARAY COMPANY, LIMITED) 24 January 2019 (2019-01-24) claims, examples, entire text | 1-12 |
| A | WO 2021/124907 A1 (FUKUVI CHEMICAL INDUSTRY COMPANY, LIMITED) 24 June 2021 (2021-06-24) claims, examples, entire text | 1-12 |
| A | JP 52-041692 A (DYNAMIT NOBEL AKTIENGESELLSCHAFT) 31 March 1977 (1977-03-31) claims, example 2 | 1-12 |
| A | JP 03-140327 A (HUELS AKTIENGESELLSCHAFT) 14 June 1991 (1991-06-14) claims, example 1 | 1-12 |
| A | WO 1993/000386 A1 (E.I. DU PONT DE NEMOURS AND COMPANY) 07 January 1993 (1993-01-07) claims, example 1 | 1-12 |
| P, A | WO 2022/091987 A1 (KURARAY COMPANY, LIMITED) 05 May 2022 (2022-05-05) claims, examples, entire text | 1-12 |

☐ Further documents are listed in the continuation of Box C.   ☑ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **07 February 2023** | **21 February 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/046622**

| Patent document cited in search report | | | Publication date (day/month/year) | Patent family member(s) | | | Publication date (day/month/year) |
|---|---|---|---|---|---|---|---|
| JP | 2019-011420 | A | 24 January 2019 | (Family: none) | | | |
| WO | 2021/124907 | A1 | 24 June 2021 | EP | 4052894 | A1 | |
| | | | | claims, examples, entire text | | | |
| | | | | CN | 114829144 | A | |
| | | | | KR | 10-2022-0107258 | A | |
| JP | 52-041692 | A | 31 March 1977 | US | 4111921 | A | |
| | | | | claims, example 2 | | | |
| | | | | GB | 1557272 | A | |
| | | | | DE | 2542938 | A | |
| | | | | FR | 2325673 | A | |
| | | | | CA | 1063293 | A | |
| JP | 03-140327 | A | 14 June 1991 | US | 5300557 | A | |
| | | | | claims, example 1 | | | |
| | | | | EP | 423472 | A2 | |
| | | | | DE | 3934926 | A | |
| | | | | CA | 2027965 | A1 | |
| WO | 1993/000386 | A1 | 07 January 1993 | US | 5110900 | A | |
| | | | | claims, example 1 | | | |
| | | | | EP | 593577 | A1 | |
| | | | | AU | 2226492 | A | |
| | | | | CA | 2111247 | A | |
| WO | 2022/091987 | A1 | 05 May 2022 | (Family: none) | | | |

Form PCT/ISA/210 (patent family annex) (January 2015)

**REFERENCES CITED IN THE DESCRIPTION**

**Patent documents cited in the description**

- JP H05032888 A
- JP H08294918 A
- JP 2013159675 A
- WO 2015046290 A
- JP H07228690 A
- JP 2021206185 A